# EUROPEAN PATENT SPECIFICATION

(11) **EP 2 690 968 B1**
(45) Date of publication and mention of the grant of the patent: **16.12.2015**
(21) Application number: 12711694.5
(22) Date of filing: 12.03.2012
(51) Int. Cl.: A23L 1/01, A23L 1/035

(54) **USE OF PROPYLENE GLYCOL TO CONTROL THE DEGREE OF HEAT -INDUCED FOAM GENERATION A FOOD SYSTEM**
VERWENDUNG VON PROPYLENGLYKOL ZUR STEUERUNG DER HITZEGRADINDUZIERTEN SCHAUMBILDUNG EINES NAHRUNGSMITTELSYSTEMS
UTILISATION DU PROPYLÈNE GLYCOL POUR RÉGULER LA GÉNÉRATION DE MOUSSE INDUITE PAR LA CHALEUR DANS UN PRODUIT ALIMENTAIRE

(30) Priority: 31.03.2011 US 201161470069 P; 02.06.2011 GB 201109272
(43) Date of publication of application: 05.02.2014
(73) Proprietor: DuPont Nutrition Biosciences ApS, 1001 Copenhagen K (DK)
(72) Inventor: ALEXANDER, Jesse, West Chester, OH 45069 (US); NEDDERSEN, John, New Century, KS 66031 (US)
(74) Representative: D Young & Co LLP
(86) International application number: PCT/IB2012/051157
(87) International publication number: WO 2012/131513

(56) References cited:
- EP-A1- 0 815 730
- WO-A1-2008/065401
- JP-A- 2 027 967
- US-A- 4 252 834
- US-A1- 2010 015 293

## Description

### FIELD OF INVENTION

The present invention relates to a use. In particular, the present invention relates to the use of a composition to control the degree of heat induced foam generation in a foodstuff system when said foodstuff system is heated.

### BACKGROUND

Present day consumers expect convenience foodstuffs to be capable of being heated quickly for consumption. There are various methods available for heating foodstuffs quickly. Such methods can include suspending the foodstuff in water which is of sufficient temperature to satisfactorily heat and/ or cook the foodstuff, e.g. boiling water. Other methods include subjecting the foodstuff, either alone or suspended in a liquid, to microwaves, i.e. by placing the foodstuff in a microwave oven.

Such methods of heating foodstuffs can, however, create a number of drawbacks. For example, where the foodstuff is heated rapidly, liquid used to heat the foodstuff or liquid present in the foodstuff itself (for example where the foodstuff is a soup) will begin to boil. This boiling leads to an increase in the total volume of the system being heated due to the liberation of gas from the liquids, i.e. the heating of the foodstuff system results in the formation of bubbles and/ or foam.

As a result of the foodstuff being heated, components such as carbohydrates and proteins are released from the foodstuff into the cooking water. These components can alter the surface tension of the cooking water. This change in the surface tension of the cooking water can result in the release of gas from the foodstuff system being inhibited. As the foodstuff continues to be cooked, further bubbles and/ or foam builds up underneath the bubbles and/or foam formed at the surface of the system. This leads to a cascade of bubbles and/ or foam being retained in the foodstuff system and the total volume of the foodstuff system can rapidly increase.

This increase in the total volume of the system being heated can be troublesome. In particular, the volume of the system can quickly exceed the volume of the container used to cook the foodstuff. In this instance, the bubbles and/or foam can boil over.

The loss of liquid due to the overflow of bubbles and/ or liquid can lead to the volume of the liquid in the container being reduced and the container effectively "boiling dry". This is clearly undesirable as it can have a detrimental effect on the foodstuff being cooked, as well as presenting a potential safety issue.

So as to prevent the bubbles and/ or foam from overflowing, the container in which the foodstuff is being heated in will need to be sufficiently large to accommodate the increase in volume. However, the use of oversize containers can lead to inefficient concentration of heat and therefore potentially increase the time and energy required in order to heat the foodstuff.

A further problem with the use of such oversize containers is the consumer impression of the cooked foodstuff. It is unsatisfactory from the perspective of the consumer to find that the amount of foodstuff purchased, say in a plastic container, does not completely fill the container.

It is to be noted that the build up of bubbles and/ or foam during the cooking of a foodstuff can also be a problem where the foodstuff itself is a liquid but has a surface tension which leads to the build up of bubbles and/ or foam when heated.

A further problem associated with the generation of excessive foam is that the foam produced by the heating of the foodstuff can become burnt. This burning of the foam can result in "caking" on the surface of the cooked foodstuff, which is not pleasant for the consumer from a visual or taste perspective. Therefore, the bubbles and/ or foam generated by the heating of the foodstuff need not actually boil over the sides of the container in order for them to be considered as a problem.

Also, where the foam does spill over from the container in which the foodstuff is being heated, it can be burnt onto the surface of the cooking apparatus used to heat the foodstuff. For example, where a stove is being used to heat the foodstuff, foam which has overflowed onto the surface of the stove will be burnt onto the surface of the stove. This is highly undesirable, as it results in an unsightly residue being left on the stove which is often difficult to remove. A similar effect can also be seen when the foodstuff is cooked in a microwave and foam is projected onto the inner surfaces of the microwave. This foam results in a residue which is difficult to remove and may leave unpleasant odours in the microwave.

US 2006/0121168 discloses the use of a three component composition comprising salt, instant starch and at least one surfactant as an "anti boil-over" composition. Acetem is mentioned as the preferred surfactant. Acetem is an acetylated monoglyceride.

The addition to foodstuffs of compositions containing additional amounts of salt can be a problem as consumers may be deterred from such compositions from a nutritional and health standpoint. IP02027967 describes a method for preventing emission and scattering of can-packed beverages upon opening.

In view of the above, it would be desirable to provide a composition which could be used to control the degree of boil-over in a foodstuff system when said foodstuff system is heated.

### SUMMARY ASPECTS OF THE PRESENT INVENTION

The present invention relates to the use of a composition to control the degree of heat induced foam generation in a foodstuff system when said foodstuff system is heated, wherein the composition comprises a fatty acid ester of propylene glycol.

It has been surprisingly found that compositions comprising a propylene glycol fatty acid derivative are particularly effective at controlling the heat induced foam generation in a system comprising a liquid foodstuff, a solid foodstuff immersed in a liquid and/ or a mixture of a liquid foodstuff with an additional liquid.

It has also surprisingly been found that a one component composition can be used to successfully control heat induced foam generation in a system comprising a liquid foodstuff, a solid foodstuff immersed in a liquid, and/ or a mixture of a liquid foodstuff with an additional liquid.

Therefore, in one aspect of the present invention there is provided the use of a composition to control the degree of heat induced foam generation in a foodstuff system when said foodstuff system is heated, wherein the composition comprises a fatty acid ester of propylene glycol.

In a second aspect of the present invention, there is provided the use of a composition to control the degree of heat induced foam generation in a foodstuff system when said foodstuff system is heated, wherein the composition comprises a fatty acid ester of propylene glycol and polyglycerol polyricinoleic acid.

In a third aspect of the present invention, there is provided the use of a composition to control the degree of heat induced foam generation in a foodstuff system when said foodstuff system is heated, wherein the composition comprises a fatty acid ester of propylene glycol and a mono-diglyceride.

In a fourth aspect of the present invention, there is provided an anti foaming composition wherein the composition comprises a fatty acid ester of propylene glycol.

For ease of reference these and further aspects of the present invention are now discussed under appropriate section headings. However, the teachings under each section are not necessarily limited to each particular section.

### DETAILED DESCRIPTION

In one aspect, the present invention relates to the use of a composition to control the degree of heat induced foam generation in a foodstuff system when said foodstuff system is heated, wherein the composition comprises a fatty acid ester of propylene glycol.

### Heat induced foam generation

According to the present invention, there is provided the use of a composition to control the degree of heat induced foam generation in a foodstuff system when said foodstuff system is heated.

Heat induced foam generation, as herein defined, refers to the bubbles and/ or foam generated from a foodstuff system, when that system is heated. Thus, when a foodstuff system is heated, foam and/ or bubbles may be generated which increase the total volume of the foodstuff system, potentially leading to the foodstuff system rising over the top of the container used to heat the foodstuff. This is also referred to in the art as "boil over". Heat induced foam generation and boil over are used interchangeably throughout the present disclosure. An agent which controls boil over may be referred to as an "anti-boil" agent.

It is noted that the heating of the foodstuff system need not be such that the foodstuff system actually boils in the sense that it is heated to 100 °C. The present invention encompasses the control of heat induced foam generation where the foodstuff system is heated to temperatures other than 100 °C including less than or greater than 100 °C.

It will be understood that the term "control" includes reducing, preventing, inhibiting, suppressing and/or terminating the production of heat-induced foam (boil over) by the foodstuff system when heated. In some instances, the heat-induced foam generation may not be completely eliminated; however, the generation of heat-induced foam will be controlled to a greater extent than if no anti-boil agent were added.

It will also be understood that the term "foam" refers to the manifestation of gas liberated from the foodstuff system. The term "foam" therefore also includes bubbles or other descriptions of gas liberation, such as blisters etc.

### Foodstuff system

According to the present invention, "foodstuff system" refers to any system comprising either a foodstuff on its own and/ or a foodstuff when combined, coated, or immersed in a liquid.

A "foodstuff" is any substance which is suitable for consumption by humans or animals and is intended for that purpose. The foodstuff may be solid or liquid. In some cases, the foodstuff may transform during cooking from a solid to a liquid. Furthermore, foodstuffs comprising a combination of liquid and solid components are also encompassed by the present invention.

Thus, reference to the term "foodstuff system" herein refers to a solid foodstuff alone, a solid foodstuff combined, coated, or immersed in a liquid, a liquid foodstuff alone, a liquid foodstuff mixed with an additional liquid and a foodstuff which comprises both solid and liquid components.

Examples of foodstuffs in which the use of the present invention may be employed include, but are not limited to, rice, noodles, pasta, such as macaroni, rotini, and shells etc., casseroles, stews, dressings, gravy, beverages, ready to eat meals, cheese sauces, pasta sauces, soups, marinades, marinaded food products, vegetables, beans, pulses, lentils, desserts, oatmeal based foodstuffs, toppings, such as custard, cream and the like, and any of the above when in a dehydrated, powdered or condensed state.

In one embodiment, the foodstuff is selected from the group consisting of rice, noodles, pasta, casseroles, stews, dressings, gravy, beverages, ready to eat meals, pasta sauces, soups, marinades, marinaded food products, vegetables, beans, pulses, lentils, desserts, toppings, such as custard and the like, and any of the above when in a dehydrated, powdered or condensed state.

In one embodiment, the foodstuff is selected from the group consisting of rice, noodles, pasta, casseroles, stews, dressings, gravy, beverages, ready to eat meals, pasta sauces, and soups. In one embodiment, the foodstuff is selected from the group consisting of rice, noodles, and pasta. In one preferred embodiment, the foodstuff is pasta.

In one embodiment, the foodstuff system may be any of the above foodstuffs combined, coated or immersed in a liquid. In one embodiment, the foodstuff system is selected from a combination of rice, noodles, and/ or pasta with a liquid.

In one embodiment, the foodstuff system is a combination of different foodstuffs. For example, the food stuff system may be a combination of pasta and vegetables, or of rise and vegetables, or of noodles and vegetables.

In one embodiment, the foodstuff system comprises at least one of pasta, rice or noodles.

Where the foodstuff is inherently a solid, e.g. pasta, then it is typically immersed in an amount of water sufficient to at least completely cover the foodstuff to be cooked. However, less liquid may be utilized as necessary to satisfactorily heat and/ or cook the foodstuff.

Thus, in one embodiment, the foodstuff system is selected from a combination of one or more foodstuffs, with a liquid. In one embodiment, the foodstuff system is selected from a combination of one or more of rice, noodles, and pasta, with a liquid.

In one embodiment, where the foodstuff is a solid, the foodstuff is combined, coated, or immersed in from 10ml to 10000ml of liquid. In one embodiment, where the foodstuff is a solid, the foodstuff is combined, coated, or immersed in from 10ml to 5000ml of liquid. In one embodiment, where the foodstuff is a solid, the foodstuff is combined, coated, or immersed in from 10ml to 1000ml of liquid. In one embodiment, where the foodstuff is a solid, the foodstuff is combined, coated, or immersed in from 10ml to 500ml of liquid. In one embodiment, where the foodstuff is a solid, the foodstuff is combined, coated, or immersed in from 100ml to 450ml of liquid. In one embodiment, where the foodstuff is a solid, the foodstuff is combined, coated, or immersed in from 150ml to 400ml of liquid. In one embodiment, where the foodstuff is a solid, the foodstuff is combined, coated, or immersed in from 200ml to 350ml of liquid. In one embodiment, where the foodstuff is a solid, the foodstuff is combined, coated, or immersed in from 250ml to 350ml of liquid. In one embodiment, where the foodstuff is a solid, the foodstuff is combined, coated, or immersed in about 10ml of liquid. In one embodiment, where the foodstuff is a solid, the foodstuff is combined, coated, or immersed in about 25ml of liquid. In one embodiment, where the foodstuff is a solid, the foodstuff is combined, coated, or immersed in about 35ml of liquid. In one embodiment, where the foodstuff is a solid, the foodstuff is combined, coated, or immersed in about 50ml of liquid. In one embodiment, where the foodstuff is a solid, the foodstuff is combined, coated, or immersed in about 100mi of liquid. In one embodiment, where the foodstuff is a solid, the foodstuff is combined, coated, or immersed in about 105ml of liquid. In one embodiment, where the foodstuff is a solid, the foodstuff is combined, coated, or immersed in about 110ml of liquid. In one embodiment, where the foodstuff is a solid, the foodstuff is combined, coated, or immersed in about 115ml of liquid. In one embodiment, where the foodstuff is a solid, the foodstuff is combined, coated, or immersed in about 150ml of liquid. In one embodiment, where the foodstuff is a solid, the foodstuff is combined, coated, or immersed in about 200ml of liquid. In one embodiment, where the foodstuff is a solid, the foodstuff is combined, coated, or immersed in about 250ml of liquid. In one embodiment, where the foodstuff is a solid, the foodstuff is combined, coated, or immersed in about 300ml of liquid.

In one embodiment, the liquid in which the foodstuff is combined, coated, or immersed in is any suitable liquid for cooking and/ or heating a foodstuff in. In one embodiment, the liquid in which the foodstuff is combined, coated, or immersed in is water. In one embodiment, the liquid in which the foodstuff is combined, coated, or immersed in is water and/ or milk.

Where the foodstuff is inherently a liquid, e.g. soup, then it may be heated either on its own or alternatively with an additional liquid. Where an additional liquid is present with the liquid foodstuff, the additional liquid may be present in an amount of from about 10ml to 10000ml. In one embodiment, the additional liquid may be present in an amount of from about 10ml to 1000ml. In one embodiment, the additional liquid may be present in an amount of from about 10ml to 500ml. In one embodiment, the additional liquid may be present in an amount of from about 20ml to 500ml. In one embodiment, the additional liquid may be present in an amount of from about 30ml to 500ml. In one embodiment, the additional liquid may be present in an amount of from about 40ml to 500ml. In one embodiment, the additional liquid may be present in an amount of from about 50ml to 500ml. In one embodiment, the additional liquid may be present in an amount of from about 60ml to 500ml. In one embodiment, the additional liquid may be present in an amount of from about 75ml to 500ml. In one embodiment, the additional liquid may be present in an amount of from about 100ml to 450ml. In one embodiment, the additional liquid may be present in an amount of from about 150ml to 400ml. In one embodiment, the additional liquid may be present in an amount of from about 200ml to 350ml. In one embodiment, the additional liquid may be present in an amount of from about 250ml to 300ml. In one embodiment, the additional liquid may be present in an amount of about 10ml. In one embodiment, the additional liquid may be present in an amount of about 25ml. In one embodiment, the additional liquid may be present in an amount of about 50ml. In one embodiment, the additional liquid may be present in an amount of about 75ml. In one embodiment, the additional liquid may be present in an amount of about 100ml. In one embodiment, the additional liquid may be present in an amount of about 125ml. In one embodiment, the additional liquid may be present in an amount of about 150ml. In one embodiment, the additional liquid is water.

In one embodiment, the additional liquid is any suitable liquid for heating and/ or cooking a foodstuff in. In one embodiment, the additional liquid is water and/ or milk.

In one embodiment, the use of the present invention is employed in bulk food preparation systems. Thus, the volume of the foodstuff system prior to heating may be from 10L to 50000L, although larger volumes may be used. In one embodiment, the volume of the foodstuff is from about 10L to about 50000L. In one embodiment, the volume of the foodstuff is from about 100L to about 15000L. In one embodiment, the volume of the foodstuff is from about 1000L to about 15000L. In one embodiment, the volume of the foodstuff is from about 5000L to about 15000L. In one embodiment, the volume of the foodstuff is from about 5000L to about 10000L.

### Fatty acid esters of propylene glycol

The present invention relates to the use of a composition to control the degree of heat induced foam generation in a foodstuff system when said foodstuff system is heated, wherein the composition comprises a fatty acid ester of propylene glycol.

A fatty acid ester of propylene glycol is defined herein as being a derivative formed as a result of the combination of one or more fatty acids with one or more propylene glycol units.

Propylene glycol (propane-1,2-diol or 1,2-propanediol) has the following structure:

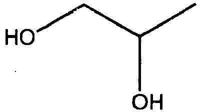

Thus, it will be appreciated that propylene glycol can be combined with one or more fatty acids through the free hydroxy groups on the propylene glycol unit to form a fatty acid ester. Thus, propylene glycol fatty acid derivatives may also be referred to as propane-1,2-diol esters of fatty acids.

Fatty acids are well known in the art. They typically comprise an "acid moiety" and a "fatty chain". The properties of the fatty acid can vary depending on the length of the fatty chain, its degree of saturation, and the presence of any substituents on the fatty chain. Examples of fatty acids are palmitic acid, stearic acid, oleic acid, and ricinoleic acid.

One example of a fatty acid ester of propylene glycol is propylene glycol monostearate (PGMS). Propylene glycol monostearate is a combination of stearic acid with propylene glycol. Propylene glycol monostearate has the following structure:

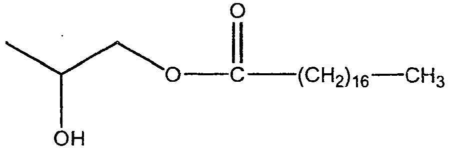

As will be understood, propylene glycol distearate has the following structure:

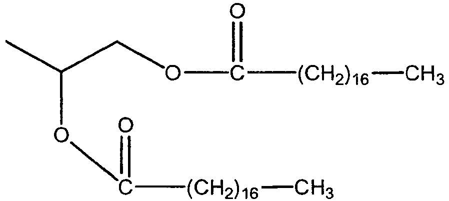

The fatty acid ester of propylene glycol use in the present invention may be a monoester, a diester or a mixture of mono- and di-esters of propylene glycol. Further, where the fatty acid ester of propylene glycol is a monoester of propylene glycol the fatty acid ester can be formed with either hydroxy group of the propylene glycol. For example, propylene glycol monostearate can be 1-propylene glycol monostearate, 2-propylene glycol monostearate or a mixture of 1-propylene glycol monostearate and 2-propylene glycol monostearate. Likewise for other monoesters of propylene glycol, they can be 1-monoesters of propylene glycol, 2-monoesters of propylene glycol or mixtures of 1 and 2-monoesters of propylene glycol.

In one embodiment, the fatty acid ester of propylene glycol is a monoester. In one embodiment, the fatty acid ester of propylene glycol is a diester. In either case, trace amounts of diesters or monoesters may be present. However, these should not be considered as having a material effect on the composition.

In one embodiment, the fatty acid ester of propylene glycol is a blend of mono and diesters (a mono-diester). In this embodiment, there will typically be at least 10% of one type of ester and up to 90% of the other, e.g. 90 % monoester, 10% diester. In one embodiment, there may be at least 5 % of one type of ester and up to 95% of the other, e.g. 95% monoester, 5% diester.

In a preferred embodiment, the fatty acid ester of propylene glycol is propylene glycol monostearate (PGMS) which has a minimum of 90% monoester.

The fatty acid ester of propylene glycol may also comprise a combination of different fatty acids. Thus, the fatty acid ester of propylene glycol may be a diester comprising different fatty acids.

In one embodiment, the fatty acid ester of propylene glycol is of formula I 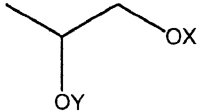 where Y and X may be the same or different and are selected from H and -CO-(CH₂)ₙ-CH₃ where n is an integer between 6 and 24.

In one embodiment, n is an integer between 6 and 24. In one embodiment, n is selected from 6, 7, 8, 9, 10, 11, 12, 13, 14, 15, 16, 17, 18, 19, 20, 21, 22, 23 or 24.

In one embodiment, X is H and Y is -CO-(CH₂)ₙ-CH₃ where n is selected from 6, 7, 8, 9, 10, 11, 12, 13, 14, 15, 16, 17, 18, 19, 20, 21, 22, 23 or 24. In one embodiment, Y is H and X is -CO-(CH₂)ₙ-CH₃ where n is selected from 6, 7, 8, 9, 10, 11, 12, 13, 14, 15, 16, 17, 18, 19, 20, 21, 22, 23 or 24.

In one embodiment, both X and Y are -CO-(CH₂)ₙ-CH₃ where n is selected from 6, 7, 8, 9, 10, 11, 12, 13, 14, 15, 16, 17, 18, 19, 20, 21, 22, 23 or 24, where n for X and Y may be the same or different.

In one embodiment, at least one of X and Y is -CO-(CH₂)ₙ-CH₃ where n is an integer between 10 and 20 and the other of X and Y is H. In one embodiment, at least one of X and Y is -CO-(CH₂)ₙ-CH₃ where n is an integer between 12 and 18 and the other of X and Y is H. In one embodiment, at least one of X and Y is -CO-(CH₂)ₙ-CH₃ where n is an integer between 14 and ₁₈ and the other of X and Y is H. In one embodiment, at least one of X and Y is -CO-(CH₂)ₙ-CH₃ where n is 16 and the other of X and Y is H.

It is envisaged that the above mentioned fatty acids may be saturated or unsaturated, and/ or substituted or unsubstituted. Where the fatty acid is unsaturated, the double bonds may be in either the cis or the trans configuration.

In one embodiment, the fatty acid ester of propylene glycol is distilled. For example, the fatty acid ester of propylene glycol may be distilled propylene glycol monostearate.

In one embodiment, the fatty acid ester of propylene glycol is a propylene glycol mono ester.

In one embodiment, the fatty acid ester of propylene glycol is a propylene glycol mono ester, wherein the fatty acid chain of the mono ester has from 6 to 24 carbon atoms.

In one embodiment, the fatty acid ester of propylene glycol is a propylene glycol mono ester, wherein the fatty acid chain of the mono ester has from 10 to 18 carbon atoms.

In one embodiment, the fatty acid ester of propylene glycol is propylene glycol monostearate.

The fatty acid ester of propylene glycol employed in the use of the present invention may be utilised at concentrations which are suitable for use in foodstuffs according to recommended daily guidelines.

In this regard, the fatty acid ester of propylene glycol may be prepared as a composition which is suitable for use in foodstuffs according to recommended guidelines. Alternatively, the fatty acid ester of propylene glycol may be prepared as a composition which may be subsequently diluted to a concentration which is suitable for use in foodstuffs according to recommended daily guidelines.

In one embodiment, the use of the present invention may employ a composition which comprises at least 5wt. % fatty acid ester of propylene glycol. In one embodiment, the use of the present invention may employ a composition which comprises at least 10wt. % fatty acid ester of propylene glycol. In one embodiment, the composition comprises at least 20wt. % fatty acid ester of propylene glycol. In one embodiment, the composition comprises at least 30wt. % fatty acid ester of propylene glycol. In one embodiment, the composition comprises at least 40wt. % fatty acid ester of propylene glycol. In one embodiment, the composition comprises at least 50 wt. % fatty acid ester of propylene glycol. In one embodiment, the composition comprises at least 60 wt. % fatty acid ester of propylene glycol. In one embodiment, the composition comprises at least 70wt. % fatty acid ester of propylene glycol. In one embodiment, the composition comprises at least 80wt. % fatty acid ester of propylene glycol. In one embodiment, the composition comprises at least 90wt. % fatty acid ester of propylene glycol. In one embodiment, the composition consists essentially of fatty acid ester of propylene glycol. In one embodiment, the composition consists of a fatty acid ester of propylene glycol. Thus, in one embodiment there is provided the use of a fatty acid ester of propylene glycol to control the degree of heat-induced foam generation in a foodstuff system when said foodstuff system is heated.

In this regard, "consisting essentially of or "consists essentially of" is defined herein as meaning that in addition to the components which are recited, other components may also be present in the composition, provided that the essential characteristics of the composition are not materially affected by their presence.

In one embodiment, the composition employed in the use of the present invention is present in the foodstuff system in an amount such that the amount of fatty acid ester of propylene glycol present in the foodstuff is equal to or less than the recommended guideline daily amount.

In one embodiment, the composition employed in the use of the present invention is present in the foodstuff system in an amount of at least about 0.5% w/w based on the total weight of the foodstuff system. In one embodiment, the composition employed in the use of the present invention is present in the foodstuff system in an amount of at least about 0.6% w/w based on the total weight of the foodstuff system. In one embodiment, the composition employed in the use of the present invention is present in the foodstuff system in an amount of at least about 0.7% w/w based on the total weight of the foodstuff system. In one embodiment, the composition employed in the use of the present invention is present in the foodstuff system in an amount of at least about 0.8% w/w based on the total weight of the foodstuff system. In one embodiment, the composition employed in the use of the present invention is present in the foodstuff system in an amount of at least about 0.9% w/w based on the total weight of the foodstuff system. In one embodiment, the composition employed in the use of the present invention is present in the foodstuff system in an amount of at least about 1.0% w/w based on the total weight of the foodstuff system.

In one embodiment, the composition employed in the use of the present invention is present in the foodstuff system in an amount of from about 0.5% to about 3% w/w based on the total weight of the foodstuff system. In one embodiment, the composition employed in the use of the present invention is present in the foodstuff system in an amount of from about 1% to about 3% w/w based on the total weight of the foodstuff system. In one embodiment, the composition employed in the use of the present invention is present in the foodstuff system in an amount of from about 1% to about 2.9% w/w based on the total weight of the foodstuff system. In one embodiment, the composition employed in the use of the present invention is present in the foodstuff system in an amount of from about 1% to about 2.8% w/w based on the total weight of the foodstuff system. In one embodiment, the composition employed in the use of the present invention is present in the foodstuff system in an amount of from about 1% to about 2.7% w/w based on the total weight of the foodstuff system. In one embodiment, the composition employed in the use of the present invention is present in the foodstuff system in an amount of from about 1% to about 2.6% w/w based on the total weight of the foodstuff system. In one embodiment, the composition employed in the use of the present invention is present in the foodstuff system in an amount of from about 1% to about 2.5% w/w based on the total weight of the foodstuff system.

As will be appreciated, the amount of fatty acid ester of propylene glycol present based on the total weight of the foodstuff system will depend on the amount of fatty acid ester of propylene glycol present in the composition and the amount of the composition present in the foodstuff system. Thus, where the composition comprises at least 10% w/w fatty acid ester of propylene glycol, and the composition is present in the foodstuff system in an amount of at least 0.5% by weight based on the total weight of the foodstuff system, the amount of fatty acid ester of propylene glycol present is at least about 0.05% w/w of the total foodstuff system. Where the composition comprises at least 90% w/w fatty acid ester of propylene glycol, and the composition is present in the foodstuff system in an amount of at least 0.5% by weight based on the total weight of the foodstuff system, the amount of fatty acid ester of propylene glycol present is at least about 0.45% w/w of the total foodstuff system.

In one embodiment, the fatty acid ester of propylene glycol is present in the foodstuff system in an amount of at least about 0.5% w/w based on the total weight of the foodstuff system. In one embodiment, fatty acid ester of propylene glycol is present in the foodstuff system in an amount of at least about 0.6% w/w based on the total weight of the foodstuff system. In one embodiment, fatty acid ester of propylene glycol is present in the foodstuff system in an amount of at least about 0.7% w/w based on the total weight of the foodstuff system. In one embodiment, fatty acid ester of propylene glycol is present in the foodstuff system in an amount of at least about 0.8% w/w based on the total weight of the foodstuff system. In one embodiment, fatty acid ester of propylene glycol is present in the foodstuff system in an amount of at least about 0.9% w/w based on the total weight of the foodstuff system. In one embodiment, fatty acid ester of propylene glycol is present in the foodstuff system in an amount of at least about 1.0% w/w based on the total weight of the foodstuff system.

In one embodiment, fatty acid ester of propylene glycol is present in the foodstuff system in an amount of from about 0.5% w/w to about 3% w/w based on the total weight of the foodstuff system. In one embodiment, fatty acid ester of propylene glycol is present in the foodstuff system in an amount of from about 0.7% w/w to about 3% w/w based on the total weight of the foodstuff system. In one embodiment, fatty acid ester of propylene glycol is present in the foodstuff system in an amount of from about 1% w/w to about 2.9% w/w based on the total weight of the foodstuff system. In one embodiment, fatty acid ester of propylene glycol is present in the foodstuff system in an amount of from about 1% w/w to about 2.8% w/w based on the total weight of the foodstuff system. In one embodiment, fatty acid ester of propylene glycol is present in the foodstuff system in an amount of from about 1% w/w to about 2.7% w/w based on the total weight of the foodstuff system. In one embodiment, fatty acid ester of propylene glycol is present in the foodstuff system in an amount of from about 1 % w/w to about 2.6% w/w based on the total weight of the foodstuff system. In one embodiment, fatty acid ester of propylene glycol is present in the foodstuff system in an amount of from about 1 % w/w to about 2.5% w/w based on the total weight of the foodstuff system.

It is envisaged that any combination of the above mentioned amounts of fatty acid ester of propylene glycol present in the composition and the amount of the composition present in the foodstuff system can be used in the present invention.

The skilled person will readily understand that the amount of fatty acid ester of propylene glycol which should be present in the foodstuff system should be such that heat induced foam generation is effectively controlled.

Thus, the above mentioned concentrations of the compositions and the amount of fatty acid ester of propylene glycol acid in the foodstuff system also apply to applications where the foodstuff system is being prepared in bulk.

In one embodiment, the composition of the present invention may be in the form of a solid, for example a powder. In one embodiment, the composition of the present invention may be a liquid.

### Heating

It will be understood that the present invention is employed where a foodstuff is heated to such a degree that the liberation of gas from the foodstuff system is induced. In one embodiment, the foodstuff system may be heated to the extent that the foodstuff system boils or approaches boiling. In this regard, water typically boils at approximately 100 °C. Thus, in one embodiment of the present invention, the foodstuff system is heated to approximately 100 °C. However, it will be understood that in some environments, the foodstuff system will begin to boil (liberate steam) at temperatures below 100 °C. Thus, in one embodiment of the present invention, the foodstuff system is heated to around or above 50°C. In one embodiment of the present invention, the foodstuff system is heated to above 60°C. In one embodiment of the present invention, the foodstuff system is heated to above 70°C. In one embodiment of the present invention, the foodstuff system is heated to above 80°C. In one embodiment of the present invention, the foodstuff system is heated to above 90°C. Therefore, it may be that the foodstuff system is heated to a temperature which is slightly below 100 °C yet still displays the physical signs of heat induced foam generation. Thus, in one embodiment of the present invention, the foodstuff system is heated to such a degree that heat induced foam generation would typically be expected absent the presence of the composition defined herein.

In one embodiment of the present invention, the foodstuff system is heated to a temperature in the range from around 50°C to 110°C. In one embodiment of the present invention, the foodstuff system is heated to a temperature in the range from around 60°C to 110°C. In one embodiment of the present invention, the foodstuff system is heated to a temperature in the range from around 70°C to 110°C. In one embodiment of the present invention, the foodstuff system is heated to a temperature in the range from around 80°C to 110°C. In one embodiment of the present invention, the foodstuff system is heated to a temperature in the range from around 90°C to 110°C.

Heating may be performed by any suitable means. The method of heating will often depend on the preference of the consumer and the suitability of the particular foodstuff system to any particular method. Examples of heating methods include convection heating, conduction heating, induction heating and heating by radiation. Typical methods for heating foodstuff systems as defined herein include heating on a stove or gas hob/ burner (conduction) or in a microwave (radiation).

In one embodiment, the foodstuff system is heated by microwave radiation. In one embodiment, the foodstuff is heated by microwave radiation to a degree sufficient to induce foam generation from the foodstuff system.

### Combinations with polyglycerol polyricinoleic acid and/ or mono-diglycerides

It has been found that where the composition comprises a combination of the fatty acid ester of propylene glycol and polyglycerol polyricinoleic acid (PGPR) or a mono-diglyceride, the amount of fatty acid ester of propylene glycol needed to control the degree of boil over can be reduced. Therefore, the composition may further comprise polyglycerol polyricinoleic acid and/or a mono-diglyceride.

Thus, in a further aspect of the present invention, there is provided the use of a composition to control the degree of heat induced foam generation in a foodstuff system when said foodstuff system is heated, wherein the composition comprises a fatty acid ester of propylene glycol and polyglycerol polyricinoleic acid.

In a further aspect of the present invention, there is provided the use of a composition to control the degree of heat induced foam generation in a foodstuff system when said foodstuff system is heated, wherein the composition comprises a fatty acid ester of propylene glycol and a mono-diglyceride.

In a further aspect of the present invention, there is provided the use of a composition to control the degree of heat induced foam generation in a foodstuff system when said foodstuff system is heated, wherein the composition comprises a fatty acid ester of propylene glycol, polyglycerol polyricinoleic acid and a mono-diglyceride.

### Polyglycerol polyricinoleic acid

### Polyglycerols

Polyglycerols are substances consisting of oligomer ethers of glycerol. Polyglycerols are usually prepared from an alkaline polymerisation of glycerol at elevated temperatures.

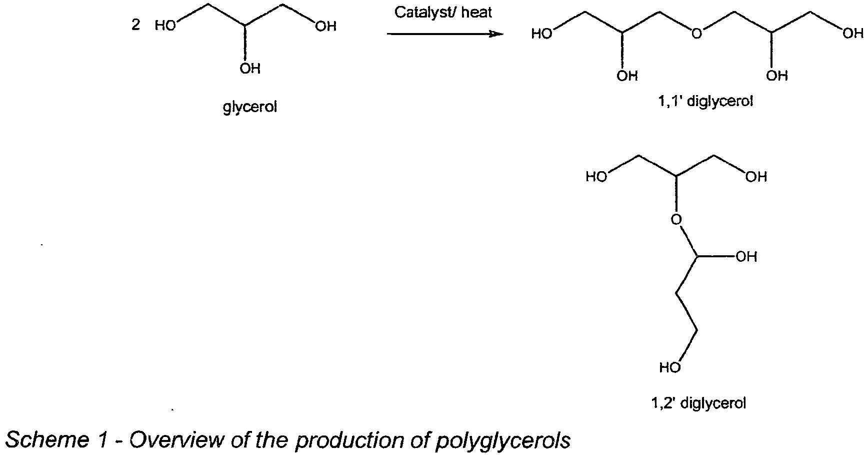

The processes for making polyglycerols are well known to the person skilled in the art and can be found, for example, in "Emulsifiers in Food Technology", Blackwell Publishing, edited by RJ Whithurst, page 110 to 130.

It will be understood that the degree of polymerisation can vary. In one embodiment, the polyglycerol used to form the polyglycerol ester of a polymerised fatty acid is selected from diglycerol, triglycerol, tetraglycerol, pentaglycerol, hexaglycerol, heptaglycerol, octaglycerol, nonaglycerol and decaglycerol and mixtures thereof.

In one embodiment, the polyglycerol is considered to be a diglycerol. In one embodiment, the polyglycerol is considered to be a triglycerol. In one embodiment, the polyglycerol is considered to be a tetraglycerol. In one embodiment, the polyglycerol is considered to be a pentaglycerol. In one embodiment, the polyglycerol is considered to be a hexaglycerol. In one embodiment, the polyglycerol is considered to be a heptaglycerol. In one embodiment, the polyglycerol is considered to be an octaglycerol. In one embodiment, the polyglycerol is considered to be a nonaglycerol. In one embodiment, the polyglycerol is considered to be a decaglycerol.

In one embodiment, the polyglycerol moiety shall be composed of not less than 75% of di-, tri- and tetraglycerols and shall contain not more than 10% of polyglycerols equal to or higher than heptaglycerol.

Polyglycerols may be linear, branched or cyclic in structure. Generally, all three types of polyglycerol structure may be present in the composition of the present invention. In one embodiment, the polyglycerol is linear. In one embodiment, the polyglycerol is branched. In one embodiment, the polyglycerol is cyclic.

### Fatty acids

Fatty acids are well known in the art. They typically comprise an "acid moiety" and a "fatty chain". The properties of the fatty acid can vary depending on the length of the fatty chain, its degree of saturation, and the presence of any substituents on the fatty chain. Examples of fatty acids are palmitic acid, stearic acid, oleic acid, and ricinoleic acid.

The fatty acid used in polyglycerol polyricinoleic acid is ricinoleic acid.

Ricinoleic acid is a chiral molecule. Two steric representations of ricinoleic acid are given below:

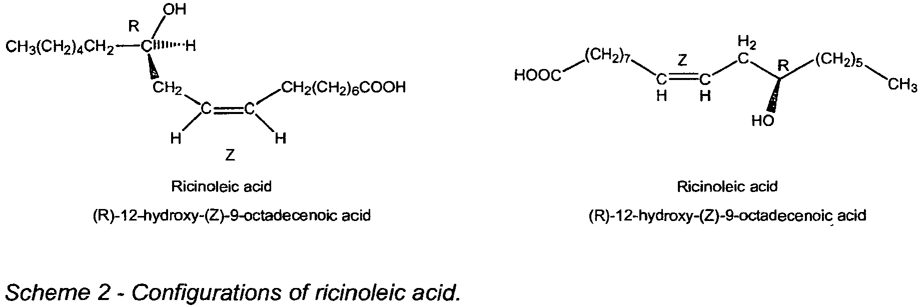

The ricinoleic acid used in the present invention may be prepared by any suitable means known to the person skilled in the art. Typically, fatty acids are produced from a parent oil via hydrolyzation and distillation.

### Polymerized fatty acids

The polymerized fatty acid may be prepared by any suitable means for condensing or polymerizing fatty acids. It will be understood that the fatty acid used in the present invention comprises a hydroxyl group. Said hydroxyl groups are present in order to ensure that the polymerization of the fatty acid is not terminated. However, it will be understood by the skilled person that the fatty acid may comprise one or more other groups in addition to, or in place of, the hydroxyl group, which can act to facilitate polymerization of the fatty acid.

Typically, the polymerisation can be carried out by self-condensation of the fatty acid. This can be carried out at about 200 to 210 °C, with or without a catalyst, under reduced pressure to remove water liberated from the condensation.

Acceptable catalysts are those known in the art and include acids such as phosphoric acid, bases such as sodium hydroxide, and lipase enzymes.

US 2008/0233059 provides at least one method for the production of polymerised fatty acids, in particular, polyricinoleic acid.

The degree of polymerisation of the fatty acids can vary. However, it will be understood by the skilled person that the products of polymerization reactions are typically mixtures of polymers with varying degrees of polymerization. Thus, characterisation of the polymerization product is typically carried out by measuring physical characteristics of the product as a whole.

In one embodiment, the average degree of polymerization is above one fatty acid residue per molecule.

In one embodiment, the polymerized fatty acid comprises an average of two fatty acid residues per molecule. In one embodiment, the polymerized fatty acid comprises an average of three fatty acid residues per molecule. In one embodiment, the polymerized fatty acid comprises an average of four fatty acid residues per molecule. In one embodiment, the polymerized fatty acid comprises an average of five fatty acid residues per molecule. In one embodiment, the polymerized fatty acid comprises an average of six fatty acid residues per molecule. In one embodiment, the polymerized fatty acid comprises an average of seven fatty acid residues per molecule.

In order to produce the polyglycerol polyricinoleic acid, the polyglycerol and polymerised fatty acid can be combined in one of a number of ways. For example, the polyglycerol polyricinoleic acid may be produced by direct esterification of the polyglycerol and the polymerised fatty acid. A further method of producing polyglycerol polyricinoleic acid is described in US 2008/0233059.

In one embodiment, the polyglycerol polyricinoleic acid may be produced by direct esterification of the polyglycerol and the polymerized fatty acid.

As mentioned above, due to the complexity of the products produced via a process including a polymerization step, said products are often characterised by their physical characteristics.

In one embodiment, the polyglycerol polyricinoleic acid has at least one of the following characteristics:
i) an acid value of less than or equal to 2.0mg KOH;
ii) an alkaline value of about 2.5 to about 4.0 m/100g;
iii) a saponification value of about 175.0 to about 185.0 mgKOH;
iv) an hydroxyl value of about 80.0 to about 100.0 mgKOH;
v) a peroxide value of less than or equal to 3.0 me/kg;
vi) an iodine value of about 72 to about 100 gl₂; and
vii) a refractive index of about 1,4630 to about 1,4665.

### i) acid value

In one embodiment, the polyglycerol polyricinoleic acid has an acid value of less than or equal to 2.0mg KOH. In one embodiment, the polyglycerol polyricinoleic acid has an acid value of less than 1.8mg KOH. In one embodiment, the polyglycerol polyricinoleic acid has an acid value of less than 1.7mg KOH. In one embodiment, the polyglycerol polyricinoleic acid has an acid value of less than 1.6mg KOH. In one embodiment, the polyglycerol polyricinoleic acid has an acid value of less than 1.5mg KOH. In one embodiment, the polyglycerol polyricinoleic acid has an acid value of less than 1.4mg KOH. In one embodiment, the polyglycerol polyricinoleic acid has an acid value of less than 1.3mg KOH. In one embodiment, the polyglycerol polyricinoleic acid has an acid value of less than 1.2mg KOH. In one embodiment, the polyglycerol polyricinoleic acid has an acid value of less than 1.1 mg KOH. In one embodiment, the polyglycerol polyricinoleic acid has an acid value of about 1.0mg KOH.

In one embodiment, the polyglycerol polyricinoleic acid has an acid value of from about 0.5 to 1.5mg KOH. In one embodiment, the polyglycerol polyricinoleic acid has an acid value of from about 0.75 to 1.25mg KOH. In one embodiment, the polyglycerol polyricinoleic acid has an acid value of from about 0.8 to 0.95mg KOH.

### ii) alkaline value

In one embodiment, the polyglycerol polyricinoleic acid has an alkaline value of about 2.5 to about 4.0 m/100g. In one embodiment, the polyglycerol polyricinoleic acid has an alkaline value of about 2.6 to about 3.9 m/100g. In one embodiment, the polyglycerol polyricinoleic acid has an alkaline value of about 2.6 to about 3.5 m/100g. In one embodiment, the polyglycerol polyricinoleic acid has an alkaline value of about 2.6 to about 3.2 m/100g. In one embodiment, the polyglycerol polyricinoleic acid has an alkaline value of about 2.7 to about 3.0 m/100g.

### iii) saponification value

In one embodiment, the polyglycerol polyricinoleic acid has a saponification value of about 175.0 to about 185.0 mgKOH. In one embodiment, the polyglycerol polyricinoleic acid has a saponification value of about 175.0 to about 184.0 mgKOH. In one embodiment, the polyglycerol polyricinoleic acid has a saponification value of about 175.0 to about 183.0 mgKOH. In one embodiment, the polyglycerol polyricinoleic acid has a saponification value of about 175.0 to about 182.0 mgKOH. In one embodiment, the polyglycerol polyricinoleic acid has a saponification value of about 175.0 to about 181.0 mgKOH. In one embodiment, the polyglycerol polyricinoleic acid has a saponification value of about 175.0 to about 180.0 mgKOH. In one embodiment, the polyglycerol polyricinoleic acid has a saponification value of about 176.0 to about 178.0 mgKOH.

### iv) hydroxyl value

In one embodiment, the polyglycerol polyricinoleic acid has an hydroxyl value of about 80.0 to about 100.0 mgKOH. In one embodiment, the polyglycerol polyricinoleic acid has an hydroxyl value of about 85.0 to about 100.0 mgKOH. In one embodiment, the polyglycerol polyricinoleic acid has an hydroxyl value of about 86.0 to about 100.0 mgKOH. In one embodiment, the polyglycerol polyricinoleic acid has an hydroxyl value of about 87.5 to about 100.0 mgKOH. In one embodiment, the polyglycerol polyricinoleic acid has an hydroxyl value of about 89.0 to about 100.0 mgKOH. In one embodiment, the polyglycerol polyricinoleic acid has an hydroxyl value of about 92.0 to about 98.0 mgKOH.

### v) peroxide value

In one embodiment, the polyglycerol polyricinoleic acid has a peroxide value of less than or equal to 3.0 me/kg. In one embodiment, the polyglycerol polyricinoleic acid has a peroxide value of less than or equal to 2.5.0 me/kg. In one embodiment, the polyglycerol polyricinoleic acid has a peroxide value of less than or equal to 2.0 me/kg. In one embodiment, the polyglycerol polyricinoleic acid has a peroxide value of less than or equal to 1.0 me/kg. In one embodiment, the polyglycerol polyricinoleic acid has a peroxide value of less than or equal to 0.5 me/kg. In one embodiment, the polyglycerol polyricinoleic acid has a peroxide value of about 0.0 me/kg.

### vi) iodine value

In one embodiment, the polyglycerol polyricinoleic acid has an iodine value of about 72 to about 100 gl₂. In one embodiment, the polyglycerol polyricinoleic acid has an iodine value of about 72 to about 95 gl₂. In one embodiment, the polyglycerol polyricinoleic acid has an iodine value of about 72 to about 90 gl₂. In one embodiment, the polyglycerol polyricinoleic acid has an iodine value of about 72 to about 85 gl₂. In one embodiment, the polyglycerol polyricinoleic acid has an iodine value of about 72 to about 84 gl₂.

### vii) refractive index

In one embodiment, the polyglycerol polyricinoleic acid has a refractive index of about 1,4630 to about 1,4665. In one embodiment, the polyglycerol polyricinoleic acid has a refractive index of about 1,4640 to about 1,4665. In one embodiment, the polyglycerol polyricinoleic acid has a refractive index of about 1,4645 to about 1,4665. In one embodiment, the polyglycerol polyricinoleic acid has a refractive index of about 1,4650 to about 1,4665.

The above mentioned physical characteristics are measured according to the following analytical methods.

| | |
|---|---|
| Acid value (AV) | FAO Food and Nutrition Paper 5, Rev. 2, p. 189 |
| Alkaline value (ALV) | AOCS, Da 4a-48 |
| Saponification value (SV) | FAO Food and Nutrition Paper 5, Rev. 2, p. 203-204 |
| Hydroxyl value (OHV) | FAO Food and Nutrition Paper 5, Rev. 2, p. 190-191 |
| Refractive index | FAO Food and Nutrition Paper 5, Rev. 2, p. 45 |
| Iodine value (IV) | FAO Food and Nutrition Paper 5, Rev. 2, p. 194 |
| Peroxide value (PV) | AOCS, Cd 8-53 |

In one embodiment, the polyglycerol polyricinoleic acid has more than one of the above mentioned characteristics i) to vii). In one embodiment, the polyglycerol polyricinoleic acid has all of the above mentioned characteristics i) to vii).

In one embodiment, the polyglycerol polyricinoleic acid has at least one of the above mentioned characteristics i) to vii). In one embodiment, the polyglycerol polyricinoleic acid has more than one of the above mentioned characteristics i) to vii). In one embodiment, the polyglycerol polyricinoleic acid has all of the above mentioned characteristics i) to vii).

In one embodiment, the polyglycerol polyricinoleic acid has a hydroxyl value of 80-100, a saponification value of 175-185, an iodine value of 72-100 and a refractive index of 1.463 to 1.4665. A suitable polyglycerol polyricinoleic acid for use in the present invention is GRINSTED PGPR 90 KOSHER as produced by Danisco A/S.

In one embodiment, the composition comprises the fatty acid ester of propylene glycol and polyglycerol polyricinoleic acid in a ratio of from 40:1 to 1:1 (fatty acid ester of propylene glycol : polyglycerol polyricinoleic acid). In one embodiment, the ratio is from 35:1 to 5:1. In one embodiment, the ratio is from 30:1 to 5:1.

In one embodiment, where the composition comprises a blend of polyglycerol polyricinoleic acid with the fatty acid ester of propylene glycol, the composition comprises greater than about 0.64% fatty acid ester of propylene glycol by total weight of the foodstuff system.

### Mono-diglycerides

Mono-diglycerides are well known in the art. They are combinations of fatty acids with a glyceride backbone. They can be prepared in any number of ways as described in "Emulsifiers in Food Technology", Blackwell Publishing, edited by RJ Whithurst, the entire contents of which is incorporated herein by reference.

In one embodiment of the present invention, the mono-diglycerides used in combination with the fatty acid ester of propylene glycol are predominately monoglycerides. In one embodiment, mono-diglycerides employed in the present invention are distilled monoglycerides or distilled diglycerides.

The fatty acids of the mono-diglyceride are not specifically limited. They may be derived from sunflower oil, soybean oil, palm oil or any other suitable vegetable oil.

In one embodiment, the fatty acids of the mono-diglycerides may have from 6 to 26 carbon atoms. In one embodiment, the fatty acid component of the mono-diglyceride is of the formula - CO-(CH₂)ₘ-CH₃, where m is selected from 6, 7, 8, 9, 10, 11, 12, 13, 14, 15, 16, 17, 18, 19, 20, 21, 22, 23 or 24.

The fatty acids may be saturated or unsaturated, substituted or unsubstituted. Where the fatty acids are unsaturated, the double bonds may be present in the fatty acid in either the cis or the *trans* configuration. The iodine value of the mono-diglycerides may range from about 2 to about 110 gl₂.

In one embodiment, the mono-diglyceride is a distilled monoglyceride having a minimum monoester content of 90%. In one embodiment, the mono-diglyceride is a mixture of monoglycerides and diglycerides and has a minimum monoester content of 50%, preferably 52%.

In one embodiment, the composition comprises about 50% by weight of the fatty acid ester of propylene glycol and about 50% by weight mono-diglycerides.

In one embodiment, the composition comprises about 75% by weight of the fatty acid ester of propylene glycol and about 25% by weight mono-diglycerides.

In one embodiment, the composition comprises about 50 to 90% by weight of the fatty acid ester of propylene glycol and 50% to 10% by weight mono-diglycerides.

In one embodiment, the composition comprises about 10 to 90% by weight of the fatty acid ester of propylene glycol and 90% to 10% by weight mono-diglycerides.

In one embodiment, where the composition comprises a blend of the mono-diglycerides with the fatty acid ester of propylene glycol, the composition comprises greater than 5% by weight fatty acid ester of propylene glycol by total weight of the composition.

In one embodiment, where the composition comprises a blend of the mono-diglycerides with the fatty acid ester of propylene glycol, the composition comprises at least or greater than 10% by weight fatty acid ester of propylene glycol by total weight of the composition.

In one embodiment, where the composition comprises a blend of the mono-diglycerides with the fatty acid ester of propylene glycol, the composition comprises greater than 0.016% fatty acid ester of propylene glycol by total weight of the composition.

### Anti-foaming composition

In a further aspect of the present invention, there is provided an anti-foaming composition comprising a fatty acid ester of propylene glycol and optionally polyglycerol polyricinoleic acid or a mono-diglyceride.

According to the present invention, an "anti-foaming" composition is any composition which has the effect of controlling the heat induced foam generation in a foodstuff system when said foodstuff system is heated. In one embodiment, the anti-foaming composition reduces the amount of heat induced foam generation in the foodstuff when heated.

In one embodiment, the foodstuff system is as defined above.

In one embodiment, the composition comprises fatty acid ester of propylene glycol which is as defined above.

The present invention is not confined to foodstuff systems, but may also be employed in any system which requires the control of foam generation.

### Instant foodstuff

In a further aspect of the present invention, there is provided a packaged instant foodstuff comprising the composition of the present invention as defined above. By packaged instant foodstuff it is meant a foodstuff which is packaged such that the foodstuff is to be cooked and consumed using the same container.

In a further aspect of the present invention, there is provided a foodstuff which is coated in some manner with the composition of the present invention as defined above. In this regard, the foodstuff may be coated with the composition in any suitable manner, e.g. by spraying the composition on top of the foodstuff.

### EXAMPLES

The present invention will now be described with reference to the following non-limiting examples.

### Example 1 - Investigation of anti-boil properties of PGMS versus ACETEM

In order to assess the ability of PGMS to control heat induced foam generation in a foodstuff system which is heated, the following procedure was carried out:

### Procedure:

3g of the tested agent was added to a 400ml beaker. 40g of pasta was added, along with 100-120g of water. The foodstuff system was then heated in a microwave (Panasonic NN-T994SF) for 3 minutes on full power (1250 Watt).

Time observed for boiling over was measured visually using a stop watch. The following results were obtained.

**Table 1 - Investigation of PGMS and Acetem at 3g in a foodstuff system of 40g pasta**

| **Agent** | **Amount of agent used** | **Amount of water in system** | **Boil Over** | **Time(s) to boil over** |
|---|---|---|---|---|
| Acetem 50-00 | 3g | 100g | Yes | 90 |
| Acetem 50-00 + NaCl | 3g | 100g | Yes | 90 |
| Acetem 95 CO | 3g | 100g | Yes | 75 |
| Acetem 70-00 | 3g | 105g | No | |
| Acetem 70-00 | 3g | 115g | Yes | 90 |
| Acetem 70-00 | 3g | 120g | Yes | 90 |
| PGMS USK K | 3g | 100g | Very slight | |
| PGMS USV K* | 3g | 105g | No | |
| PGMS USV K* | 3g | 115g | No | |
| PGMS USV K | 3g | 120g | Very slight | 90 |
| No agent | | 105g | Yes | 75 |
| No agent | | 115g | Yes | 75 |
| No agent | | 120g | Yes | 75 |

Table 1 shows that PGMS can control the amount of heat induced foam generation in a foodstuff system. Unlike Acetem, which could not control boil over satisfactorily, PGMS was able to control boil over even when the volume of the foodstuff system was modified. *These results were confirmed using white rice (40g) as the foodstuff.

PGMS USV K is a kosher approved distilled propylene glycol ester made from fully hydrogenated vegetable oil available from Danisco A/S (GRINSTED PGMS USV K).

Acetem 50, 95-CO and 70-00 are acetic acid esters of monoglycerides made from edible, fully hydrogenated palm based oil available from Danisco A/S (GRINSTED ACETEM 50-00, GRINSTED ACETEM 95-CO, GRINSTED ACETEM 70-00).

### Example 2 - Investigation of suitable amounts of PGMS

In order to determine suitable amounts of PGMS which could be employed in a foodstuff system to control boil over, the following procedure was carried out.

### Procedure:

Tests were run as in Example 1, except that the amount of PGMS added was varied.

**Table 2 - Investigation of PGMS at varying amounts in a foodstuff system of 40g pasta**

| **Agent** | **Amount of agent used** | **Amount of water in system** | **Boil Over** | **Time(s) to boil over** |
|---|---|---|---|---|
| PGMS USV K | 3g | 100g | Very slight | 90 |
| PGMS USV K | 3g | 105g | No | |
| PGMS USV K | 3g | 115g | No | |
| PGMS USV K | 3g | 120g | Very slight | 90 |
| PGMS USV K | 2g | 100g | Very slight | 90 |
| PGMS USV K | 1g | 100g | Yes | 80 |
| PGMS USV K | 3.5g | 115g | No | |

Table 2 shows that in a foodstuff system of 40g pasta and 100g water, 1g of PGMS is not able to effectively control boil over. In the same system, using PGMS in an amount greater than 3g did not appear to have any additional impact on the control of boil over.

### Example 3 - Investigation into the amount of water in the foodstuff system that can be tolerated by using 3g of an anti-boil agent

### Procedure:

The procedure carried out was the same as in Example 1, except that the amount of water in the foodstuff system was varied. The results are shown in Table 3.

**Table 3 - Ability of PGMS and Acetem to control boil over in systems with varying amounts of water**

| | **Water amount used in system (g)** | | | |
|---|---|---|---|---|
| | **120** | **115** | **110** | **105** |
| PGMS | Very slight | No | No | No |
| ACETEM | Yes | Yes | Yes | No |

As can be seen in Table 3, Acetem was unable to effectively control boil over in a foodstuff system including 40g pasta where the volume of water was 110g or more. In contrast, PGMS was able to control boil over in a foodstuff system which includes up to 120g of water. Therefore, PGMS may be employed in foodstuff systems including larger volumes of water compared with those for which Acetem may be used.

Examples 1 to 3 show that PGMS is superior to Acetem in controlling heat induced foam generation in a foodstuff system.

### Example 4 - Combination of PGMS and PGPR (polyglycerol polyricinoleic acid)

### Procedure:

The procedure used was the same as in Example 1, except that 115g of water was used and a composition which contained a blend of varying amounts of PGMS and PGPR as set out in Table 4 were used.

**Table 4 - Combinations of PGMS and PGPR and ability to inhibit boil over**

| | **PGMS (g)** | **PGPR (g)** | **Boil over** |
|---|---|---|---|
| **Blend 1** | 3 | 0.2 | No |
| **Blend 2** | 2 | 0.2 | No |
| **Blend 3** | 1 | 0.2 | No |
| **Blend 4** | 3 | 0.15 | No |
| **Blend 5** | 2 | 0.15 | No |
| **Blend 6** | 1 | 0.15 | No |
| **Blend 7** | 3 | 0.1 | No |
| **Blend 8** | 2 | 0.1 | No |
| **Blend 9** | 1 | 0.1 | No |

Table 4 shows that even a relatively small amount of PGPR (0.1g) can enhance the anti-boil properties of PGMS. For example, when PGMS is used in an amount of 1g on its own, it is not able to effectively control boil over (see Table 2). However, when 0.1g of PGPR is included (a ratio of 10:1), the combination is effectively able to control boil over. The above results were all repeated and confirmed using white rice (40g).

PGPR alone was also tested for its ability to control heat induced foam generation. The procedure used was the same as for Example 1 except that 115g of water were used. The results are shown in Table 4a.

**Table 4a - Anti-boil properties of PGPR in a foodstuff system of white rice (40g) or pasta (40g), and 115g of water.**

| | **Amount of PGPR (g)** | | | |
|---|---|---|---|---|
| | **0.15** | **0.20** | **0.25** | **0.30** |
| Pasta | Yes | Yes | No | No |
| White Rice | Yes | Yes | No | No |

As Table 4a shows, PGPR was not effective at controlling boil over when used at 0.2g or less in a foodstuff system of pasta or white rice (40g) and 115g of water.

In view of these results, it is surprising that even a combination of 0.1g of PGPR and 1g PGMS would be effective at controlling boil over in a foodstuff system, as when used on their own at these levels boil over can not be effectively controlled.

### Example 5 - Combination of PGMS and mono-diglycerides

PGMS was also combined with mono-diglycerides. The blends were prepared by melting the components of each blend and combining them. The melted combined blend was then cooled. The resulting solid blend was then ground to a powder.

### Procedure:

The blend was added to a foodstuff system of pasta (40g) and 115g water and heated in a microwave to observe for any boil over as in Example 1.

**Table 5 - Blends of PGMS and mono-diglycerides.**

| | **PGMS** | **Mono-diglyceride** | **Amount of blend** | **Boil Over** |
|---|---|---|---|---|
| Blend 10 | 75% | 25% (Dimodan P-T) | 3g | No |
| | | | 2g | No |
| | | | 1g | No |
| | | | 0.5g | No |
| Blend 11 | 75% | 25% (Dimodan U) | 3g | No |
| | | | 2g | No |
| | | | 1g | No |
| | | | 0.5g | No |
| Blend 12 | 75% | 25% (MO 90) | 3g | No |
| | | | 2g | No |
| | | | 1g | No |
| | | | 0.5g | No |
| Blend 13 | 75% | 25% (HV 52) | 3g | No |
| | | | 2g | No |
| | | | 1g | No |
| | | | 0.5g | No |
| Blend 14 | 75% | 25% (Dimodan HS) | 3g | No |
| | | | 2g | No |
| | | | 1g | No |
| | | | 0.5g | No |

### Example 5a - Combination of PGMS and mono-diglycerides in different amounts

PGMS was also combined with the above mono-diglycerides in varying amounts. The blends were prepared by melting the components of each blend and combining them. The melted combined blend was then cooled. The resulting solid blend was then ground to a powder.

### Procedure:

The blend was added to a foodstuff system of pasta (40g) and 115g water and heated in a microwave to observe for any boil over as in Example 1.

**Table 5a - Blends of PGMS and mono-diglycerides.**

| | **PGMS** | **Mono-diglyceride** | **Amount of blend** | **Boil Over** |
|---|---|---|---|---|
| Blend 15 | 87.5% | 12.5% (Dimodan P-T) | 0.5g | No |
| Blend 16 | 87.5% | 12.5% (Dimodan U) | 0.5g | No |
| Blend 17 | 87.5% | 12.5% (MO 90) | 0.5g | No |
| Blend 18 | 87.5% | 12.5% (HV 52) | 0.5g | No |
| Blend 19 | 87.5% | 12.5% (Dimodan HS) | 0.5g | No |
| Blend 20 | 62.5% | 37.5% (Dimodan P-T) | 0.5g | No |
| Blend 21 | 62.5% | 37.5% (Dimodan U) | 0.5g | No |
| Blend 22 | 62.5% | 37.5% (MO 90) | 0.5g | No |
| Blend 23 | 62.5% | 37.5% (HV 52) | 0.5g | No |
| Blend 24 | 62.5% | 37.5% (Dimodan HS) | 0.5g | No |
| Blend 25 | 50% | 50% (Dimodan P-T) | 0.5g | No |
| Blend 26 | 50% | 50% (Dimodan U) | 0.5g | No |
| Blend 27 | 50% | 50% (MO 90) | 0.5g | No |
| Blend 28 | 50% | 50% (HV 52) | 0.5g | No |
| Blend 29 | 50% | 50% (Dimodan HS) | 0.5g | No |
| Blend 30 | 37.5% | 62.5% (Dimodan P-T) | 0.5g | No |
| Blend 31 | 37.5% | 62.5% (Dimodan U) | 0.5g | No |
| Blend 32 | 37.5% | 62.5% (MO 90) | 0.5g | No |
| Blend 33 | 37.5% | 62.5% (HV 52) | 0.5g | No |
| Blend 34 | 37.5% | 62.5% (Dimodan HS) | 0.5g | No |
| Blend 35 | 25% | 75% (Dimodan P-T) | 0.5g | No |
| Blend 36 | 25% | 75% (Dimodan U) | 0.5g | No |
| Blend 37 | 25% | 75% (MO 90) | 0.5g | No |
| Blend 38 | 25% | 75% (HV 52) | 0.5g | No |
| Blend 39 | 25% | 75% (Dimodan HS) | 0.5g | No |
| Blend 40 | 12.5% | 82.5% (Dimodan P-T) | 0.5g | No |
| Blend 41 | 12.5% | 82.5% (Dimodan U) | 0.5g | No |
| Blend 42 | 12.5% | 82.5% (MO 90) | 0.5g | No |
| Blend 43 | 12.5% | 82.5% (HV 52) | 0.5g | No |
| Blend 44 | 12.5% | 82.5% (Dimodan HS) | 0.5g | No |
| Blend 45 | 10% | 90% (Dimodan P-T) | 0.5g | No |
| Blend 46 | 10% | 90% (Dimodan U) | 0.5g | No |
| Blend 47 | 10% | 90% (MO 90) | 0.5g | No |
| Blend 48 | 10% | 90% (HV 52) | 0.5g | No |
| Blend 49 | 10% | 90% (Dimodan HS) | 0.5g | No |
| Blend 50 | 5% | 95% (Dimodan P-T) | 0.5g | Yes |
| Blend 51 | 5% | 95% (Dimodan U) | 0.5g | Yes |
| Blend 52 | 5% | 95% (MO 90) | 0.5g | Yes |
| Blend 53 | 5% | 95% (HV 52) | 0.5g | Yes |
| Blend 54 | 5% | 95% (Dimodan HS) | 0.5g | Yes |

As can be seen from the results in Table 5a, blends between PGMS and a range of mono-diglycerides are able to effectively control boil over.

Dimodan P-T is a distilled monoglyceride made from edible, refined palm oil with a minimum monoester content of 90%.

Dimodan U is a distilled monoglyceride made from edible, refined sunflower oil with a minimum monoester content of 90%.

Dimodan MO 90 is a distilled monoglyceride made from sunflower oil with a high content of monoleate and a minimum monoester content of 90%.

HV 52 is a mono-diglyceride made from edible, refined fully hydrogenated vegetable fat with a minimum monoester content of 52%.

Dimodan HS is a distilled monoglyceride made from edible, fully hydrogenated soybean oil with a minimum monoester content of 90%.

All are available from Danisco A/S.

Table 5 shows that a blend comprising PGMS and a mono-diglyceride has anti-boil properties. Even where only 0.5g of the composition is used (amounting to 0.375g of PGMS), the blend is able to control boil over effectively.

Examples 4 and 5 show that the amount of PGMS required in order to control the amount of heat induced foam generation in a foodstuff system which is heated can be reduced by blending the PGMS with PGPR or with mono-diglycerides.

Although the invention has been described in connection with specific preferred embodiments, it should be understood that the invention as claimed should not be unduly limited to such specific embodiments. Indeed, various modifications of the described modes for carrying out the invention which are obvious to those skilled in chemistry, biology, food science or related fields are intended to be within the scope of the following claims

## Claims

1. Use of a composition to control the degree of heat-induced foam generation in a foodstuff system when said foodstuff system is heated, wherein the composition comprises a fatty acid ester of propylene glycol.

2. A use according to claim 1, wherein the fatty acid ester of propylene glycol is a propylene glycol mono ester.

3. A use according to claim 2, wherein the fatty acid ester of propylene glycol is a propylene glycol mono ester, wherein the fatty acid chain of the mono ester has from 6 to 24 carbon atoms, preferably from 10 to 18 carbon atoms.

4. A use according to claim 3, wherein the fatty acid ester of propylene glycol is propylene glycol monostearate.

5. A use according to any one of the preceding claims, wherein the fatty acid ester of propylene glycol makes up at least 40% by weight of the composition, preferably at least 50% by weight of the composition.

6. A use according to claim 5, wherein the composition consists essentially of the fatty acid ester of propylene glycol.

7. A use according to any one of claims 1 to 4, wherein the composition further comprises polyglycerol polyricinoleic acid or a mono-diglyceride.

8. A use according to any one of claims 1 to 5, wherein the composition further comprises polyglycerol polyricinoleic acid.

9. A use according to claim 8, wherein the propylene glycol fatty acid ester and polyglycerol polyricinoleic acid are present in the composition at a ratio of from 30:1 to 1:1.

10. A use according to any one of the preceding claims, wherein the composition is present in the foodstuff system in an amount sufficient to control heat induced foam generation when the foodstuff is heated.

11. A use according to any one of the preceding claims, wherein the composition is present in the foodstuff in an amount of at least 0.1 % by weight of the foodstuff system.

12. A use according to any one of the preceding claims, wherein the foodstuff system comprises a foodstuff combined with a liquid.

13. A use according to any one of the preceding claims, wherein the foodstuff in the foodstuff system is a liquid.

14. A use according to any one of claims 1 to 12, wherein the foodstuff in the foodstuff system is a solid.

15. A packaged instant foodstuff comprising the composition defined in any one of claims 1 to 9.

## Patentansprüche

1. Verwendung einer Zusammensetzung zum Steuern des Grads von wärmeinduzierter Schaumbildung in einem Lebensmittelsystem, wenn das Lebensmittelsystem erhitzt wird, wobei die Zusammensetzung einen Fettsäureester von Propylenglycol umfasst.

2. Verwendung gemäß Anspruch 1, wobei der Fettsäureester von Propylenglycol ein Propylenglycolmonoester ist.

3. Verwendung gemäß Anspruch 2, wobei der Fettsäureester von Propylenglycol ein Propylenglycolmonoester ist, wobei die Fettsäurekette des Monoesters von 6 bis 24 Kohlenstoffatome aufweist, vorzugsweise von 10 bis 18 Kohlenstoffatome.

4. Verwendung gemäß Anspruch 3, wobei der Fettsäureester von Propylenglycol Propylenglycolmonostearat ist.

5. Verwendung gemäß einem der vorstehenden Ansprüche, wobei der Fettsäureester von Propylenglycol wenigstens 40 Gew.-% der Zusammensetzung bildet, vorzugsweise wenigstens 50 Gew.-% der Zusammensetzung.

6. Verwendung gemäß Anspruch 5, wobei die Zusammensetzung im Wesentlichen aus dem Fettsäureester von Propylenglycol besteht.

7. Verwendung gemäß einem der Ansprüche 1 bis 4, wobei die Zusammensetzung ferner Polyglycerolpolyricinolsäure oder ein Mono-Diglycerid umfasst.

8. Verwendung gemäß einem der Ansprüche 1 bis 5, wobei die Zusammensetzung ferner Polyglycerolpolyricinolsäure umfasst.

9. Verwendung gemäß Anspruch 8, wobei der Propylenglycolfettsäureester und die Polyglycerolpolyricinolsäure in einem Verhältnis von 30:1 bis 1:1 in der Zusammensetzung vorhanden sind.

10. Verwendung gemäß einem der vorstehenden Ansprüche, wobei die Zusammensetzung in einer Menge in dem Lebensmittel enthalten ist, die ausreicht, um wärmeinduzierte Schaumbildung zu steuern, wenn das Lebensmittel erhitzt wird.

11. Verwendung gemäß einem der vorstehenden Ansprüche, wobei die Zusammensetzung in einer Menge von wenigstens 0,1 Gew.-% des Lebensmittelsystems in dem Lebensmittel enthalten ist.

12. Verwendung gemäß einem der vorstehenden Ansprüche, wobei das Lebensmittelsystem ein mit einer Flüssigkeit kombiniertes Lebensmittel umfasst.

13. Verwendung gemäß einem der vorstehenden Ansprüche, wobei das Lebensmittel in dem Lebensmittelsystem eine Flüssigkeit ist.

14. Verwendung gemäß einem der Ansprüche 1 bis 12, wobei das Lebensmittel in dem Lebensmittelsystem ein Feststoff ist.

15. Verpacktes Instant-Lebensmittel, umfassend die Zusammensetzung gemäß einem der Ansprüche 1 bis 9.

## Revendications

1. Utilisation d'une composition destinée à contrôler le degré de génération de mousse induite par la chaleur dans un système de produit alimentaire, lorsque ledit système de produit alimentaire est chauffé, **caractérisée en ce que** la composition comprend un ester d'acide gras et de propylène glycol.

2. Utilisation selon la revendication 1, **caractérisée en ce que** l'ester d'acide gras et de propylène glycol est un monoester de propylène glycol.

3. Utilisation selon la revendication 2, **caractérisée en ce que** l'ester d'acide gras et de propylène glycol est un monoester de propylène glycol, où la chaîne d'acide gras du monoester possède de 6 à 24 atomes de carbone, préférablement de 10 à 18 atomes de carbone.

4. Utilisation selon la revendication 3, **caractérisée en ce que** l'ester d'acide gras et de propylène glycol est le monostéarate de propylène glycol.

5. Utilisation selon l'une quelconque des revendications précédentes, **caractérisée en ce que** l'ester d'acide gras et de propylène glycol constitue au moins 40% en poids de la composition, préférablement au moins 50% en poids de la composition.

6. Utilisation selon la revendication 5, **caractérisée en ce que** la composition est constituée essentiellement de l'ester d'acide gras et de propylène glycol.

7. Utilisation selon l'une quelconque des revendications 1 à 4, **caractérisée en ce que** la composition comprend en outre de l'acide polyglycérol polyricinoléique ou un mono-diglycéride.

8. Utilisation selon l'une quelconque des revendications 1 à 5, **caractérisée en ce que** la composition comprend en outre de l'acide polyglycérol polyricinoléique.

9. Utilisation selon la revendication 8, **caractérisée en ce que** l'ester d'acide gras et de propylène glycol et l'acide polyglycérol polyricinoléique sont présents dans la composition selon un rapport allant de 30:1 à 1:1.

10. Utilisation selon l'une quelconque des revendications précédentes, **caractérisée en ce que** la composition est présente dans le système de produit alimentaire selon une quantité suffisante pour contrôler la génération de mousse induite par la chaleur lorsque le produit alimentaire est chauffé.

11. Utilisation selon l'une quelconque des revendications précédentes, **caractérisée en ce que** la composition est présente dans le produit alimentaire selon une quantité d'au moins 0,1% en poids du système de produit alimentaire.

12. Utilisation selon l'une quelconque des revendications précédentes, **caractérisée en ce que** le système de produit alimentaire comprend un produit alimentaire combiné à un liquide.

13. Utilisation selon l'une quelconque des revendications précédentes, **caractérisée en ce que** le produit alimentaire dans le système de produit alimentaire est un liquide.

14. Utilisation selon l'une quelconque des revendications 1 à 12, **caractérisée en ce que** le produit alimentaire dans le système de produit alimentaire est un solide.

15. Produit alimentaire instantané emballé, comprenant la composition définie selon l'une quelconque des revendications 1 à 9.
